# EUROPEAN PATENT SPECIFICATION

(11) **EP 0 592 998 B1**
(45) Date of publication and mention of the grant of the patent: **05.06.1996**
(21) Application number: 93116467.7
(22) Date of filing: 12.10.1993
(51) Int. Cl.: C01G 1/06, C01D 3/22, C01F 17/00, C01G 15/00, C01F 15/00

(54) **Method for the preparation of pellets of metal halide**
Verfahren zur Herstellung von Metall-Halogenid-Pellets
Procédé de préparation de pastilles d'halogénure métallique

(30) Priority: 16.10.1992 JP 304824/92
(43) Date of publication of application: 20.04.1994
(73) Proprietor: SHIN-ETSU CHEMICAL CO., LTD., Chiyoda-ku Tokyo (JP)
(72) Inventor: Wataya, Kazuhiro, Fukui-ken (JP); Sakai, Shigeru, Fukui-ken (JP); Fukuda, Masahiko, Fukui-ken (JP); Yoshida Norifumi, Fukui-ken (JP)
(74) Representative: Blum, Rudolf Emil Ernst

(56) References cited:
- US-A- 3 948 793
- CHEMICAL ABSTRACTS, vol. 115, no. 10, 9 September 1991, Columbus, Ohio, US; abstract no. 102499e, ZENG,SHAOXIAN 'multicomponent metal halide pellets for discharge lamps'
- PATENT ABSTRACTS OF JAPAN vol. 007, no. 264 (E-212) & JP-A-58 147 938 (IWASAKI DENKI)
- DATABASE WPI Derwent Publications Ltd., London, GB; AN 92-157583 SARANSK SVETOTEKHNI & SU-A-1 653 024 (SARANSK)

## Description

### BACKGROUND OF THE INVENTION

The present invention relates to a method for the preparation of pellets of a metal halide having qualities suitable as the light-emitting source of metal halide lamps.

As a trend in recent years, various kinds of discharge lamps containing a metal halide or so-called metal halide lamps are-high-lighted and the demand therefore is rapidly increasing by virtue of the good performance of color rendition of the light emitted therefrom. It is a very essential requirement for the metal halide as the light-emitting source of metal halide lamps that the metal halide must have an extremely high purity relative to hydrogen and oxygen as well as water, oxides and hydroxides as impurities containing hydrogen and/or oxygen. This is because these impurities even in a trace amount cause an increase in the discharge voltage for the ignition of the lamp eventually resulting in failure of lamp ignition along with an increased rate of consumption of the electrode to greatly decrease the durability of the lamp.

The feed tube for the introduction of a metal halide into a discharge lamp in the manufacturing process of metal halide lamps usually has a small diameter in consideration of subsequent sealing by welding so that it is desirable that the metal halide is introduced into the lamp in the form of small pellets through the feed tube and the pellets have dimensions and weight as uniform as possible in order to facilitate introduction of them into the discharge lamp. One of the conventional methods for the preparation of pellets is the method of compression molding by using a metal mold but conventional procedures for the pelletization of a metal halide are not suitable for the preparation of metal halide pellets to be used in metal halide lamps as the light-emitting source because, since many of metal halides have high hygroscopicity, absorption of moisture by the metal halide in the process of compression molding is more or less unavoidable.

In view of the above described problem of metal halide pellets, U.S. Patent No. 3,676,534 proposes a method for the preparation of metal halide pellets suitable as the light-emitting source in a metal halide lamp, according to which a metal halide containing oxygen as a constituent of impurities is heated at a temperature higher than the melting point of the metal halide and, while the metal halide is at least partly in a molten state, a hydrogen halide, mixture of a hydrogen halide and hydrogen or mixture of a halogen gas and hydrogen, of which the halogen is the same element as the halogen of the metal halide, is blown into the melt of the metal halide so as to convert the oxygen-containing impurities other than water in the metal halide into water or a volatile compound which can be removed by washing from the gas and the thus purified molten metal halide is transferred into an atmosphere of an inert gas such as helium through a vibration-feeder tube to be solidified there into pellets of the metal halide.

This method, however, is not without problems, in particular, when two kinds or more of metal halides in admixture is to be purified in a molten state and pelletized because different metal halides naturally have different vapor pressures at the same temperature to cause alteration of the composition relative to the proportion of the different metal halides by the selective evaporation. Furthermore, molten metal halides at a high temperature are generally very reactive and corrosive against various otherwise corrosion-resistant materials so as to cause heavy corrosion of quartz glass (fused silica) which is the material most frequently used for the construction of apparatuses used in such a high-temperature reaction involving a corrosive halogen compound.

The present invention accordingly has an object to provide an improvement in the method for the preparation of pellets of metal halides having qualities suitable as the light-emitting source of metal halide lamps by virtue of the outstandingly low content of impurities such as water, hydroxides and the like by overcoming the above described problems and disadvantages in the prior art methods. The inventive method is not only absolutely free of the problem of corrosion on the apparatuses but also not under limitations relative to the kind or kinds of the metal halides so as to ensure high productivity in the preparation of metal halide pellets.

### DESCRIPTION OF THE INVENTION

The object of the present invention accordingly is a method for the preparation of pellets of a metal halide in the form of a disk or cylinder, of which the diameter does not exceed 2.0 mm and the height or length does not exceed 3.0 mm, comprising the steps of pulverizing a metal halide, of which the content of moisture as an impurity does not exceed 5 ppm by weight, into pulverized particles and compression-molding the pulverized particles of the metal halide in a metal mold, an improvement which comprises conducting each of the steps of pulverization of the metal halide and compression-molding of the pulverized particles in a metal mold under an atmosphere of an inert gas of which the dew point is -60°C or lower.

As is described above, the most characteristic feature of the improvement provided by the invention consists in conducting the steps of fine pulverization of a metal halide of low moisture content and compression-molding of the fine particles of the metal halide in an atmosphere of an inert gas of an extremely low moisture content as defined in terms of the dew point which is -60 °C or lower. The pellets of a metal halide prepared under the above mentioned conditions contain only a very small amount of impurities such as water, hydroxides and the like which adversely affect the performance of the pellets as the light-emitting source of metal halide lamps.

Since the primary object of the present invention consists in providing pellets of a metal halide suitable as the light-emitting source of a metal halide lamp, the advantage obtained according to the present invention is most remarkable when the metal halide is selected from the group consisting of the bromides and iodides of a rare earth element and an alkali metal element. A metal halide belonging to this class, which naturally is an unhydrated salt containing no water of crystallization, can be prepared by various known methods but it is essential, in order that the pellets prepared from the metal halide are satisfactory as the light-emitting source of a metal halide lamp, that the metal halide is highly purified relative to the content of moisture which should not exceed 5 ppm by weight. Such a metal halide of low moisture content can be obtained by subjecting a conventional metal halide as the starting material to a purification procedure by sublimation though not particularly limitative thereto.

The most characteristic feature of the method according to the invention consists in the specific conditions of the atmosphere under which the metal halide is finely pulverized and the fine particles of the metal halide are compression-molded into pellets in a metal mold. Namely, it is essential in the invention that these steps of pulverization and compression-molding are performed in an atmosphere of an inert gas of which the dew point is not higher than -60 °C in order to avoid moisture absorption by the metal halide during processing although the requirement for the dew point depends on the kind of the particular metal halide. Taking iodides of various metallic elements as the examples of metal halides, for example, a dew point of -60 °C or lower is sufficient for neodymium iodide but holmium iodide and thulium iodide must be processed in an atmosphere having a dew point of -80 °C or lower. Examples of the inert gas include nitrogen and rare gases such as helium and argon, of which argon is preferred in most cases because argon is the gas used as the filler gas in the manufacture of metal halide lamps. In order to ensure such a low dew point of the atmosphere, the pulverizing machine and the molding press must be installed in a metal-made glove box connected to a dehumidifying machine. Needless to say, the opening of the glove box communicating with the outer atmosphere must be provided with duplicate doors so as to minimize intrusion of the atmospheric air through the opening.

The step of pulverization of the metal halide is undertaken in order to obtain fine particles of the metal halide having a particle size distribution suitable for compression molding in a metal mold to prepare pellets. Although the particle size distribution is not particularly limitative depending on various conditions in the compression molding, it is preferable, for example, that the pulverization of the metal halide is conducted until the particle diameter of the pulverized particles is reduced not to exceed 0.2 mm when the desired pellets have a diameter of 1 mm. The type of the pulverizing machine is not particularly limitative including mortars and pestles, machine mortars, stamp mills, ball mills and the like. It is of course optional according to need that two kinds or more of different metal halides are jointly pulverized in a single pulverizing machine with an object to obtain a powder mixture of different metal halides.

The thus obtained fine powder of the metal halide is compression-molded into pellets using a die and punch as the metal mold under an inert atmosphere also having a dew point not high-er than - 60 °C. It is desirable that a metal mold is provided with an as large as possible number of dies and punches so that a plural number of pellets can be molded by a single shot to improve the productivity. The molding pressure is an important factor which affects the compressive strength of the pellets prepared thereby although the exact molding pressure should be selected depending on the kind of the particular metal halide. Generally speaking, a pressure of 506,6·10⁵ Pa (500 kgf/cm²) or larger at the pressing surface of the molding punch is practically sufficient in order to obtain compression-molded pellets having no particular problems relative to the mechanical strength irrespective of the kind of the metal halides. As to the shape and size of the metal halide pellets, it is preferable that the pellet is in the form of a disk or cylindrical column having a diameter not exceeding 2.0 mm and a height or axial length not exceeding 3.0 mm in order to facilitate the charging work of the metal halide lamps with the metal halide pellets through the feed tube in the manufacturing process of the lamps. When the metal halide pellets are prepared under the above described conditions according to the invention, the moisture content of the pellets can be as low as 5 ppm by weight or lower so that the metal halide pellets are quite satisfactory as the light-emitting source in metal halide lamps.

The improved method according to the invention is applicable to the preparation of pellets from halides of various kinds of metallic elements including the rare earth elements, i.e. yttrium and the lanthanide elements having an atomic number of 57 to 71 and alkali metal elements as well as other metallic elements such as thallium, tin, indium and the like.

In the following, the improved method according to the invention is described in more detail by way of an example and comparative example, which, however, never limit the scope of the invention in any way.

### Example

Dysprosium iodide was subjected to dehumidification purification by the sublimation method. The moisture content of the thus purified dysprosium iodide was 5 ppm by weight or lower as determined by the Karl Fischer method. In the next place, a 5 g portion of the thus dehumidified dysprosium iodide was pulverized by using a mortar and pestle of stainless steel in a stainless steel-made glove box filled with argon gas having a dew point of -85 °C. The powder of the dehumidified dysprosium iodide was compression-molded in a stainless steel metal mold into about 1500 pellets each having a diameter of 1 mm and a height of 1 mm and weighing about 3 mg. This compression molding was conducted also in the glove box. The overall length of time taken was 3 hours for the pulverization and compression molding of the dysprosium iodide. The moisture content of the thus prepared pellets was determined by the Karl Fischer method to give a value of 5 ppm by weight or lower so that the dysprosium iodide pellets were found to be quite satisfactory as the light-emitting source of metal halide lamps.

### Comparative Example

Pellets of dysprosium iodide were prepared in the same manner as above except that the procedures of pulverization and compression molding of the dehumidified dysprosium iodide were conducted in a plastic-made glove box filled with argon gas having a dew point of -50°C. The overall length of time taken was 3 hours for the pulverization and compression molding of the dysprosium iodide. The moisture content of the thus prepared pellets was determined by the Karl Fischer method to give a value of 250 ppm by weight so that the pellets were found to be not suitable as the light-emitting source of metal halide lamps.

## Claims

1. A method for the preparation of pellets of a metal halide in the form of a disk or cylinder, of which the diameter does not exceed 2.0 mm and the height or length does not exceed 3.0 mm, comprising the steps of pulverizing a metal halide, of which the content of moisture as an impurity does not exceed 5 ppm by weight, into pulverized particles and compression-molding the pulverized particles of the metal halide in a metal mold, characterized by conducting each of the steps of pulverization of the metal halide and compression-molding of the pulverized particles in a metal mold under an atmosphere of an inert gas of which the dew point is -60 °C or lower.

2. A method according to claim 1 in which the inert gas is argon.

3. A method according to claim 1 in which the pulverized particles of the metal halide have a particle diameter not exceeding 0.2 mm.

4. A method according to claim 1 in which the molding pressure in the compression molding is at least 506,6·10⁵ Pa (500 kgf/cm²).

## Patentansprüche

1. Verfahren zur Herstellung von Metall-Halogenid-Pellets in Form einer Scheibe oder eines Zylinders, bei welchen der Durchmesser von 2,0 mm nicht überschritten wird und die Höhe oder Länge von 3,0 mm nicht überschritten wird, umfassend die Schritte des Pulverisierens eines Metall-Halogenids, von welchem der Feuchtigkeitsgehalt als Verunreinigung von 5 ppm pro Gewichtseinheit nicht überschritten wird, in pulverisierte Teilchen und Kompressions-Formen der pulverisierten Teilchen in einer Metall-Form, dadurch charakterisiert, dass jeder der Schritte des Pulverisierens des Metall-Halogenids und des Kompressions-Formen der pulverisierten Teilchen in einer Metall-Form unter einer Schutzgasatmosphäre ausgeführt werden, welche einen Taupunkt von -60°C oder weniger aufweist.

2. Ein Verfahren gemäss Anspruch 1, in welchem das Schutzgas Argon ist.

3. Ein Verfahren gemäss Anspruch 1, in welchem die pulverisierten Teilchen einen Teilchendurchmesser von nicht mehr als 0,2 mm aufweisen.

4. Ein Verfahren gemäss Anspruch 1, in welchem der Kompressionsdruck beim Kompressions-Formen mindestens 506,6 x 10⁵ Pa (500 kgf/cm²) beträgt.

## Revendications

1. Un procédé pour la fabrication de pastilles d'un halogénure métallique en forme de disque ou cylindrique dont le diamètre ne dépasse pas 2,0 mm et la hauteur ou la longueur ne dépasse pas 3,0 mm y compris les étapes de pulvérisation d'un halogénure métallique dont le contenu d'humidité comme impureté ne dépasse pas 5 ppm par poids, en particules pulvérisées et le moulage par compression des particules pulvérisées de l'halogénure métallique dans un moule de métal, caractérisé en ce qu'on effectue chaque étape de la pulvérisation de l'halogénure métallique, du moulage par compression des particules pulvérisées dans un moule de métal, sous une atmosphère d'un gaz inerte dont le point de rosée est de -60°C ou moins.

2. Un procédé suivant la revendication 1 où le gaz inerte est l'argon.

3. Un procédé suivant la revendication 1 où les particules pulvérisées de l'halogénure métallique ont un diamètre de particule qui ne dépasse pas 0,2 mm.

4. Un procédé suivant la revendication 1 où la compression de moulage au cours du moulage par compression est au moins de 506,6 x 10⁵ Pa (500 kgf/cm²).
